# EUROPÄISCHE PATENTSCHRIFT

(11) **EP 1 741 952 B1**
(45) Veröffentlichungstag und Bekanntmachung des Hinweises auf die Patenterteilung: **13.08.2008**
(21) Anmeldenummer: 06015958.9
(22) Anmeldetag: 07.12.1999
(51) Int. Cl.: F16D 69/04

(54) **Bremsbelag für schienen- und schienenungebundene Fahrzeuge**
Brake pad for rail and not rail-bound vehicles
Garniture de frein pour véhicules sur rails et pas roulant sur rails

(43) Veröffentlichungstag der Anmeldung: 10.01.2007
(62) Teilanmeldung aus: 05024175.1
(73) Patentinhaber: Honeywell Bremsbelag GmbH, 21509 Glinde (DE)
(72) Erfinder: Himmelsbach, Rainer, 27327 Schwarme (DE); Grimme, Hansjörg, 21509 Glinde (DE)
(74) Vertreter: Richter, Werdermann, Gerbaulet & Hofmann

(56) Entgegenhaltungen:
- EP-A- 0 581 988
- EP-A- 0 626 228
- EP-A1- 0 442 052
- EP-A1- 0 760 436
- EP-A2- 0 254 827
- DE-A1- 4 138 933
- DE-U1- 8 201 404
- GB-A- 772 943
- JP-A- 11 210 792
- JP-A- 56 086 244

## Beschreibung

Die Erfindung betrifft einen Bremsbelag für schienen- und schienenungebundene Fahrzeuge gemäß dem Oberbegriff des Anspruches 1.

Aus dem DE-GM 82 01 404 ist ein Reibbelag für Scheibenbremsen, insbesondere für Straßenfahrzeuge und Schienenfahrzeuge bekannt. Dieser Reibbelag ist ein- oder mehrteilig ausgebildet und besteht aus einem auf einer Trägerplatte bzw. Trägerblech befestigten Block aus einem gepressten Reibwerkstoff. Die Trägerplatte weist auf der den Reibwerkstoff tragenden Seite ein aufgesintertes Halterungsbett aus einzelnen, mit dem Reibwerkstoff kraft- und formschlüssig bildenden Formkörpern mit Hinterschneidungen, Einziehungen o. dgl. auf. Auf dem Halterungsbett ist der aufgepresste Reibwerkstoff in Blockform unter Ausfüllung der Hinterschneidungen, Einziehungen o. dgl. der einzelnen Formkörper befestigt.

Mit diesem Reibbelag soll eine kraft- und formschlüssige Verbindung zwischen dem Reibwerkstoffblock und dem Trägerblech bei gleichzeitiger Erhöhung der Temperaturbeständigkeit der Haftschicht geschaffen werden. Durch die Ausbildung der Haftschicht aus einer auf dem Trägerblech aufgesinterten Schicht aus Formkörpern soll die hohe Haftung zwischen der auf das Formkörperbett aufgepressten Reibmaterialmischung und dem Trägerblech erreicht werden. Das Aufsintern des Formkörperbettes erfolgt bei gleichmäßiger Erwärmung des Trägerbleches und damit sich das Trägerblech während des Aufsinterprozesses durch die Erhitzung nicht in seiner Struktur und in seinen Eigenschaften verändert, ist es erforderlich, Trägerbleche von größerer Stärke zu verwenden, damit keine Veränderungen der physikalischen Eigenschaften des Trägerplattenmaterials eintreten.

Hinzukommt, dass bei diesem Reibbelag keine Trägerbleche aus nichtmetallischen Materialien eingesetzt werden können.

Derartige Reibbeläge, die sich in ihrem praktischen Einsatz seit langem bewährt haben, erfordern oftmals noch die Verwendung einer Zwischenschicht zwischen dem Halterungsbett und dem Reibmaterialblock. Diese Zwischenschicht wurde bisher als Binderfolie oder als Kleber ausgebildet, sie ist jedoch mit verschiedenen Nachteilen verbunden, so dass es wünschenswert ist, eine Möglichkeit zu schaffen, dass auf diese Zwischenschicht verzichtet werden kann. Weiterhin hat es sich gezeigt, dass zwischen den bekannten Halterungsbetten und der Trägerplatte bzw. zwischen dem Halterungsbett und dem Reibwerkstoff Rissbildungen und/oder Korrosion auftreten kann, so dass eine Unterrostung des Reibmaterials kriechend von der Seite auftreten kann, die zu einer Beeinträchtigung der Bremswirkung und - im Extremfall - zu einem Ausfall des Bremsbelages führen könnte.

Das Verkleben des Reibmaterials mit dem Trägerblech erfordert bei der Bremsbelagherstellung durch die Wärmebehandlung des Klebemittels relativ lange Standzeiten, was zu einer geringeren Fertigungszahl führt. Diese Standzeiten sind erforderlich, um eine gute Verklebung des Reibmaterials mit dem Trägerblech zu erreichen. Werden die Standzeiten verkürzt, dann werden schlechte Haftverbindungen erhalten, da kein vollständiger Wärmedurchgang durch das Klebemittel erreicht wird. Hinzu kommt, dass bei der Verwendung von Klebemittel das Trägerblech vorbehandelt sein muss. Die sich durch das Aufbringen von Lackschichten ergebenden Nachteile werden gemäß der EP 0 442 052 A1 dadurch vermieden, dass vor dem Aufpressen des Reibmaterials auf die Trägerplatte auf den Rauhgrund der Trägerplatte ein galvanischer Metallüberzug aufgebracht wird. Das Zusammenwirken von Rauhgrund (Halterungsbett) und galvanischem Überzug führt dabei zu einem hohen Korrosionsschutz für die Trägerplatte, während der Rauhgrund die Haftung zwischen dem Reibmaterial und der Trägerplatte bewirkt, da der galvanische Überzug dem Konturverlauf des Rauhgrundes folgt.

Es hat sich jedoch gezeigt, dass der für die Trägerplatte bisher verwendete handelsübliche Stahl sich in Bezug auf seine Festigkeitseigenschaften nach der Rauhgrund-Behandlung derart verändert, dass sich die Festigkeit des Stahls verringert. Des weiteren hat es sich gezeigt, dass Trägerplatten für Bremsbeläge an bestimmten Stellen, bevorzugterweise in ihren Endbereichen, besonders stark und hoch beansprucht werden. Trägerplatten unter anderem auch mit hammerkopfartigen Enden oder abstützenden Endflächen sind hohen dynamischen und statischen Zug- sowie Druckbelastungen und auch Schwingungen ausgesetzt; Trägerplatten mit Hinterschneidungen in ihren Endbereichen sind stark zugbeansprucht. Diese Zonen in den Endbereichen der Trägerplatte sind sehr hohen mechanischen Spannungen ausgesetzt.

Aus der DE 41 38 933 A1 ist es ferner bekannt, nach dem Aufbringen des Rauhgrundes auf die Trägerplatte und vor dem Aufpressen des Reibwerkstoffes die Trägerplatte im Bereich hochbelasteter Zonen auf Temperaturen zwischen 800° C und 900° C bei einer Behandlungszeit von drei bis fünfzehn Sekunden zu erwärmen und anschließend auf Raumtemperatur abzukühlen.

Die Literaturstelle PATENT ABSTRACTS OF JAPAN Bd. 005, Nr. 158 (M-091), 12. Oktober 1981 (1981-10-12) -& JP 56 086244 A (SUMITOMO ELECTRIC IND LTD), 13. Juli 1981 (1981-07-13) beschreibt eine Reibbelaganordnung für eine Scheibenbremse, nach der auf der Oberfläche eines Metallbleches ein Reibbelag unter Anwendung von Wärme und Druck aufgesintert wird, wobei auf die Oberfläche des Metallbleches vor dem Aufsintern ein Drahtgeflecht durch Punktschweißen oder Löten aufgebracht wird. Um die Reibbelaganordnung zu erhalten, wird auf das so vorbereitete Metallblech der pulverförmige Reibwerkstoff zusammen mit einem Bindemittel unter Verwendung einer Form unter Anwendung von Wärme und Druck so aufgesintert, dass die pulvrige Mischung in den Raum zwischen dem Drahtgeflecht und dem Metallblech eingepresst wird. Bei dieser Reibbelagherstellung wird das Metallblech, die die Trägerplatte bildet, einer Wärmeeinwirkung ausgesetzt und zwar schon durch die Anbringung des Drahtgeflechtes, das die Funktion eines Halterungsbettes dabei hat.

Die Literaturstelle PATENT ABSTRACTS OF JAPAN Bd. 1999, Nr. 13, 30. November 1999 (1999-11-30) -& JP 11 210792 (SUMITOMO ELECTRIC IND LTD; KUSHIRO BRAKE KK), 3. August 1999 (1999-08-03) offenbart einen Scheibenbremsbelag, bei dem ein Reibwerkstoff mit einer metallischen Grundplatte vollständig verbunden ist, wobei die Grundplatte mit Halteelementen versehen ist, die aus der Plattenoberfläche herausstehen und aus einem Kopfteil und einem Schaftteil bestehen, so dass sich T-förmige Verankerungselemente für den Reibwerkstoff ergeben, die aus dem Plattenmaterial ausgeformt sind.

Ein Verfahren zur Veränderung der Oberfläche eines Werkstückes, das mit einem anderen Element verbunden werden soll, beschreibt die EP-A-0 626 228. Dieses Verfahren besteht darin, dass einzelne Stellen der Oberfläche des Werkstückes einem Energiestrahl ausgesetzt werden, wodurch an jeder strahlbeaufschlagten Stelle Material des Werkstückes durch die Einwirkung des Energiestrahles geschmolzen und dabei seitlich versetzt wird, so dass dann nach dem Erhalten des erhitzten Materials eine Vertiefung in dem Werkstück erhalten wird, die von einem Bereich aus verfestigtem Material umgeben ist, der sich wallartig aus der Oberfläche des Werkstückes erhebt und einen halsartig eingezogenen Bereich bildet. Es wird auf diese Weise eine Oberflächenstruktur geschaffen. Dieses Verfahren setzt voraus, dass das Oberflächen zu behandelnde Werkstück eine große Dicke aufweisen muss, um zur Ausbildung der Vertiefungen in der Oberfläche des Werkstückes und der Oberflächenerhebungen genügend Material zur Verfügung zu haben. Mit diesem Verfahren wird in die Struktur des Materials des Werkstückes eingegriffen, was zu einer Veränderung der physikalischen und mechanischen Eigenschaften des Werkstückes führt.

Die EP-A-0 581 988 beschreibt einen Bremsklotz und ein Verfahren zu seiner Herstellung sowie Magnetschienenbremse für Straßen- und Schienenfahrzeuge, insbesondere auch für Schienenfahrzeuge mit hohen und höheren Geschwindigkeiten. Der Bremsklotz besteht aus ein- oder mehrteilig ausgebildeten, auf einem Trägerkörper gepressten Reibwerkstoffblock, wobei mindestens ein Reibwerkstoffblock auf mehreren, nicht in einer Ebene liegenden, aneinander grenzenden Flächenstücken von Teilen des gegossenen Trägerkörpers kraft- und/oder formschlüssig umfasst wird. Der Reibwerkstoffblock ist auf einem Trägerblech befestigt, das auf der den Reibwerkstoffblock tragenden Seite oder auf beiden Seiten je ein aufgesintertes Halterungsbett aus einzelnen mit dem Reibwerkstoffblock kraft- und formschlussbildenden Formkörpern mit Hinterschneidungen, Einziehungen o. dgl. als Rauhgrund aufweist, wobei auf dem Halterungsbett der aufgepresste Reibwerkstoffblock unter Ausfüllung der Hinterschneidungen, Einziehung der einzelnen Formkörper befestigt ist.

Es ist Aufgabe der vorliegenden Erfindung, einen Bremsbelag für schienen- und schienenungebundene Fahrzeuge zur Verfügung zu stellen, mit dem die obengenannten Nachteile beseitigt werden und auf einfache Weise einen sicheren und festen, insbesondere hochtemperaturfesten und sich nicht in seinen mechanischen und physikalischen Eigenschaften verändernden Materialverbund zwischen der Trägerplatte und dem Reibmaterialblock auch ohne zusätzliche Klebeschicht und unter Ausschluss einer schädlichen bzw. unerwünschten Wärmebehandlung des gesamten Reibmaterialblockes und der gesamten Trägerplatte ohne Veränderung der physikalischen Eigenschaften des Trägerplattenmaterials zu schaffen.

Diese Aufgabe wird durch einen Bremsbelag der o. g. Art mit den im Anspruch 1 gekennzeichneten Merkmalen gelöst.

Danach besteht die Erfindung bei einem Bremsbelag für schienen- und schienenungebundene Fahrzeuge darin, dass der Bremsbelag aus zwei übereinander liegend angeordneten Reibmaterialblöcken besteht, deren einander zugekehrten Oberflächen je ein Halterungsbett aus auf die Reibmaterialblöcke aufgesinterten, separaten, voneinander beabstandeten Materialerhöhungen aus einem Metallpulver aufweisen, wobei zwischen den beiden Reibmaterialblöcken mindestens eine Trägerplatte angeordnet ist, und wobei das Metallpulver unter lokal auf das Metallpulver oder lokal auf Abschnitte der Reibmaterialblöcke aufgebrachte Energiezuführung aufgebracht wird.

Die Erfindung sieht ferner eine Ausführungsform vor, nach der auf die Oberflächenstrukturen bzw. Materialerhöhungen der Reibmaterialblöcke Schichten aus einem Kunststoff, insbesondere einem Hartkunststoff, zur Ausbildung zweier Trägerplatten aufgebracht sind, die mit oder ohne einer Zwischenplatte fest miteinander verbunden sind.

Mit der erfindungsgemäßen Ausgestaltung des Bremsbelages wird der Vorteil erreicht, dass durch geringe thermische Belastung des Reibmaterialblockes beim Herstellen des Halterungsbettes mechanische und physikalische Eigenschaften des Werkstoffes der Reibmaterialblöcke nicht negativ beeinflusst werden, wobei gleichzeitig ein verbesserter Materialverbund zwischen Trägerplatte und Reibmaterialblock erzielt wird, ohne dass hierfür eine zusätzliche Binder-oder Klebeschicht zwischen der Trägerplatte und dem Reibmaterialblock erforderlich ist. Bei weiteren Nachbehandlungen, wie dem Anbringen des Reibmaterialblockes auf der Trägerplatte, beispielsweise mittels Aufpressen, wird die erzeugte Struktur des Halterungsbettes nicht verändert. Die Größe des Halterungsbettes kann lokal begrenzt in geeigneter Weise gewählt werden. Da nunmehr die Einschränkungen für die Trägerplatte aufgrund der bisher hohen thermischen Belastung beim Herstellen des Halterungsbettes entfallen, erweitert sich der Anwendungsbereich der Schaffung eines Bindungssystems, wie beispielsweise bei Sandwich-Bauteilen, mittels des Halterungsbettes ganz erheblich.

Zweckmäßigerweise werden die Materialerhöhungen aus Stahl, Metall, das Karbide und / oder Nitride enthalten kann, Keramik, Glas oder einem Hartkunststoff hergestellt. Die Materialerhöhungen werden bevorzugt rasterartig aufgebracht.

Vorzugsweise Weitergestaltungen des Bremsbelages sind in den weiteren Ansprüchen beschrieben.

Dadurch, dass die Materialerhöhungen mittels Aufsintern von Pulver oder mittels Pulverbeschichtung mit Laserstrahl, Flammstrahl oder Plasmastrahl, aufgebracht werden, ergibt sich die Möglichkeit, das Halterungsbett auch auf im Raum gekrümmten, gebogenem bzw. verformte Oberflächen ohne Schwierigkeiten auszubilden. Insbesondere bei der Pulverbeschichtung mit Laserstrahl ergibt sich der Vorteil, dass wenig Wärmeenergie eingebracht wird.

Nachstehend wird die Erfindung anhand der beigefügten Zeichnungen näher erläutert. Diese zeigen in
- Fig. 1-3: ein nicht beanspruchtes Herstellungsverfahren für einen Bremsbelag,
- Fig. 4: eine nicht beanspruchte Ausführungsform einer Trägerplatte für einen Bremsbelag,
- Fig. 5: einen vergrößerten senkrechten Längsschnitt durch einen erfinclurgsgemäβen Bremsbelag aus zwei über eine Metallfolie verbundene Reibmaterialblöcke,
- Fig. 6: einen vergrößerten senkrechten Längsschnitt durch einen erfinclurgsgemäβen Bremsbelag aus zwei Reibmaterialblöcken mit auf ihren gegenüberliegenden Oberflächen ausgebildeten Oberflächenstrukturen als Halterungsbetten und mit auf den Oberflächenstrukturen aufgebrachten Trägerplatten aus einem Hartkunststoff, wobei die beiden Trägerplatten fest miteinander verbunden sind, und
- Fig. 7: einen vergrößerten senkrechten Längsschnitt durch einen erfinclurgsgemäβen Bremsbelag aus zwei Reibmaterialblöcken mit auf ihren gegenüberliegenden Oberflächen ausgebildeten Oberflächenstrukturen als Halterungsbetten und mit auf den Oberflächenstrukturen aufgebrachten Trägerplatten aus einem Hartkunststoff, wobei die beiden Trägerplatten unter
Zwischenschaltung einer metallischen Zwischenplatte fest miteinander verbunden sind.

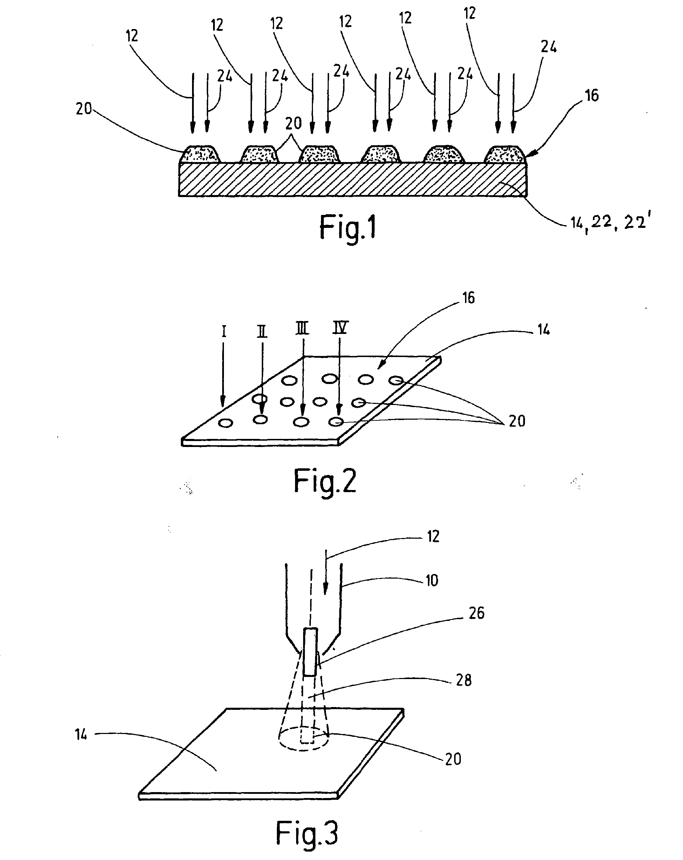

Der erfindungsgemäße Bremsbelag 100 umfasst zwei übereinander liegend angeordnete Reibmaterialblöcke 22, 22' die auf ihren gegenüberliegenden Oberflächen Halterungsbetten 16, 16' aufweisen. Die Herstellung eines jeden Halterungsbettes 16 bzw. 16' wird anhand einer Trägerplatte 14 für Bremsbeläge beispielsweise erläutert. Das Halterungsbett 16, 16' wird so hergestellt, dass mittels einer Düse 10 ein Gemisch aus einem Trägergas und einem Metallpulver 12 auf die Oberfläche der Trägerplatte 14 aufgetragen wird, so dass das Halterungsbett 16 entsteht (Fig. 1). Die Düse 10 wird beispielsweise computergesteuert über der Trägerplatte 14 verfahren und trägt das Pulver 12 rasterartig als Materialerhöhungen 20 auf die Oberfläche der Trägerplatte 14 auf (Fig. 3).

In einem nachfolgenden Sinterofen wird das aufgesprühte Pulver 12 strukturiert. Hierbei wird nicht die gesamte Trägerplatte 14, sondern nur einzelne Abschnitte der Trägerplatte 14 werden nacheinander einer Temperaturbehandlung unterzogen, so dass sich keine starke thermische Belastung der gesamten Trägerplatte 14 ergibt. Ggf. wird das Auftragen des Pulvers 12 mittels der Düse 10 zusätzlich durch Einwirken eines Laser-, Flamm- oder Plasmastrahls unterstützt.

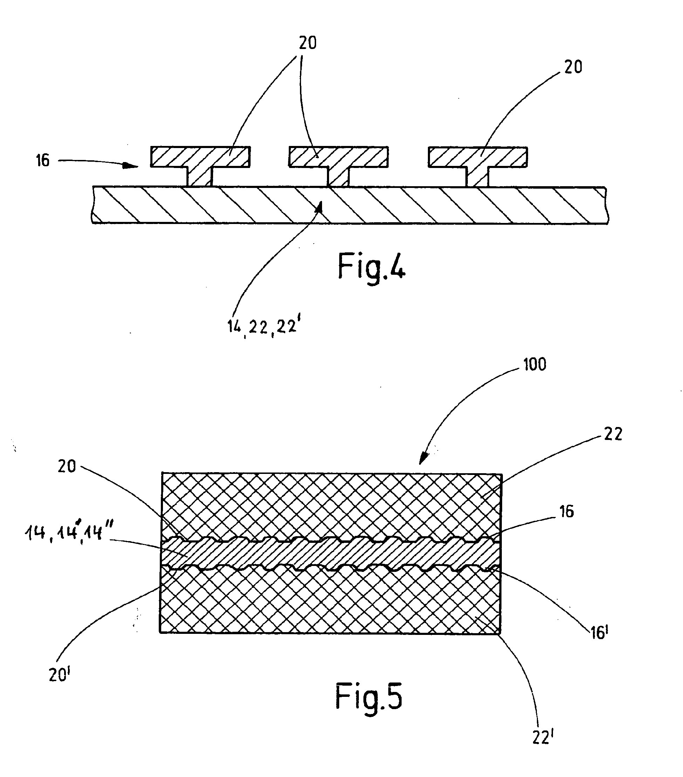

Ein Reibmaterialblock 22 wird in gleicher Weise mit einem derartigen Halterungsbett 16 versehen (Fig. 5).

Wie in Fig. 1 bis 3 veranschaulicht, wird das Pulver 12 zusammen mit einer lokal am Ort des Pulvers 12 eingebrachten Energie 24 derart aufgetragen, dass fest mit der Oberfläche der Trägerplatte 14 bzw. mit dem Reibmaterialblock 20 verbundene Materialerhöhungen 20 entstehen (Fig. 1). Die Materialerhöhungen 20 werden einzeln und nacheinander auf der Oberfläche der Trägerplatte 14 ausgebildet (Fig. 2). Mittels der eingebrachten Energie wird eine auf der Trägerplatte 14 aufgebrachte, diskrete Pulveranhäufung zu einer Oberflächenstruktur der Trägerplatte 14 mit Materialerhöhungen 20 bearbeitet.

Das Pulver wird vorzugsweise in einem Gasstrom auf die Trägerplatte 14 aufgebracht, so dass keine partielle Anhäufung gegeben ist. Die Materialerhöhungen 20 werden durch die mit dem Gasstrom mitgeführten Teilchen des Pulvers gebildet.

Das Auftragen des Pulvers 12 erfolgt beispielsweise, wie in Fig. 3 dargestellt, mittels der Düse 10 und einem Laser 26, wie beispielsweise einem Neodym-Laser, die in einer Funktionseinheit zur Laserpulverbeschichtung zusammengefasst sind und beispielsweise computergesteuert über die Trägerplatte 14 verfahren werden. An vorbestimmten Rasterstellen stoppt die Funktionseinheit, bringt Pulver 12 auf und bearbeitet dieses z. B. mittels eines Laserstrahls 28 zu einer Materialerhöhung 20. Der Laser 26 hat den besonderen Vorteil, dass gezielt und nur lokal ein Wärmeeintrag in die Trägerplatte 14 erfolgt. Dies reduziert die thermische Belastung der Trägerplatte 14 ganz erheblich und ermöglicht, dass auch bisher nicht verwendbare, thermisch empfindliche Werkstoffe als Trägerplatte mit Halterungsbett verwendet werden können.

Durch die Strukturausbildung wird die Oberfläche der Trägerplatte 14 bzw. des Reibmaterialblockes 22 vergrößert. Die Materialerhöhungen 20 dienen als Verbindung zum Reibmaterialblock. Statt des Lasers 26 ist auch eine Anwendung einer anderen Energiequelle, wie beispielsweise eines Flammstrahlers, Plasmastrahlers o. ä., möglich. Die Energiequelle muss lediglich die Eigenschaften aufweisen, Wärmeenergie punktuell bzw. in vorbestimmter Weise lokal eng begrenzt aufzubringen bzw. zu erzeugen.

In gleicher Weise, wie die Trägerplatte 14 mit einem Halterungsbett 16 für den Reibmaterialblock 22 versehen sein kann, ist erfindungsgemäß die Oberfläche des Reibmaterialblockes 22 mit einem Halterungsbett 16 versehen.

Fig. 4 veranschaulicht eine weitere Ausführungsform einer Trägerplatte 14 für den Bremsbelag. Hierbei sind die Materialerhöhungen 20 pilzartig ausgebildet, so dass sich durch entsprechende Hinterschneidungen an den Materialerhöhungen ein mechanisch besonders fester Verbund zwischen der Trägerplatte 14 und in Fig. 4 nicht dargestelltem Reibmaterialblock 22 ergibt.

Fig. 5 zeigt eine Ausführungsform, bei der zwei übereinander liegend angeordnete Reibmaterialblöcke 22, 22' über Halterungsbetten 16, 16' mit einer Trägerplatte 14" verbunden sind. Die Trägerplatte 14" ist folienartig ausgebildet und besteht aus einer Metallfolie, wobei auch eine Kunststofffolie verwendet werden kann. Die übereinander liegend angeordneten Reibmaterialblöcke 22, 22' weisen an ihren gegenüberliegenden Oberflächen die Halterungsbetten 16 aus separaten, voneinander beabstandeten Materialerhöhungen 20 als Oberflächenstruktur aus jeweiligen, separaten Pulveranhäufungen aus einem Metallpulver unter lokal auf diese Pulveranhäufungen oder lokal auf Abschnitte des Reibmaterialblockes 22, 22' aufgebrachte Energiezuführung auf. Auf jedem Reibmaterialblock 22, 22' ist aus metallischem Material oder Keramik ein Halterungsbett aus Oberflächenstrukturen bzw. Materialerhöhungen 20 angeordnet sein, wobei auf das Halterungsbett durch Auf- oder Anspritzen eines Hartkunststoffes eine Trägerplatte 14' ausgebildet ist (Fig. 5).

Die zwischen den beiden Reibmaterialblöcken angeordnete Trägerplatte 14" besteht aus Metall, einem Hartkunststoff, einer Metallfolie, Kunststofffolie, Metalllegierungen, Glas, Keramik oder Hartkunststoff und ist beidseitig mit Oberflächenstrukturen bzw. Materialerhöhungen 20, 20' versehen.

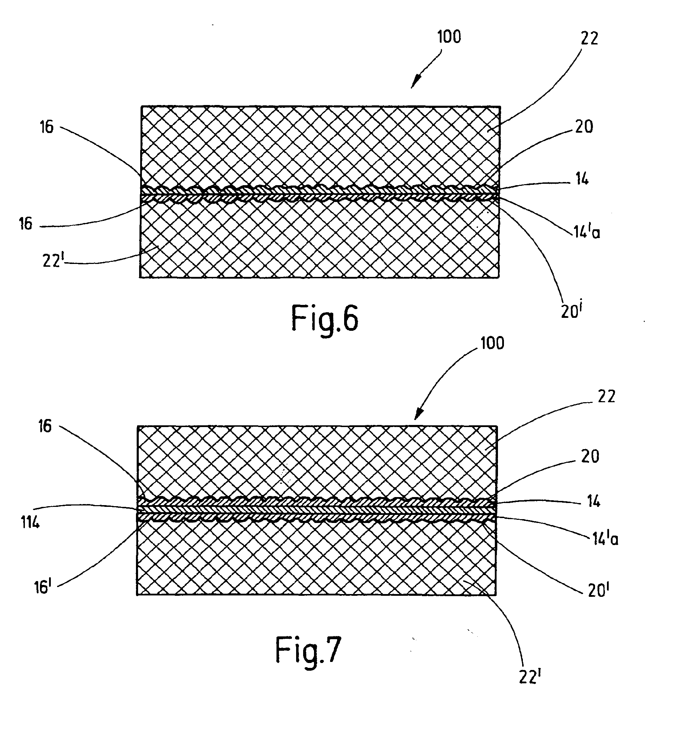

Erfindungsgemäßsind die sich gegenüberliegenden Oberflächen der beiden Reibmaterialblöcke 22, 22' mit Oberflächenstrukturen versehen, wobei dann auf diese Oberflächenstrukturen der beiden Reibmaterialblöcke 22, 22' je eine Kunststoffschicht, insbesondere aus einem Hartkunststoff als Trägerplatten 14', 14'a aufgebracht werden kann (Fig. 6). Die beiden Trägerplatten 14', 14'a werden dann miteinander verschweißt oder verklebt, wobei auch noch eine Zwischenplatte 114 aus Metall zwischen die beiden Reibmaterialblöcke 22, 22' eingearbeitet sein kann, die dann mit den Trägerplatten 14', 14'a fest verbunden ist, so dass ein derartiges sandwichartig aufgebauter Bremsbelag eine hohe Eigensteifigkeit und Festigkeit aufweist (Fig. 7). Danach besteht der Bremsbelag 100 aus zwei übereinander liegend angeordneten Reibmaterialblöcken 22, 22', deren einander gegenüberliegenden Oberflächen mit Oberflächenstrukturen bzw. Materialerhöhungen 20, 20' versehen sind, auf die Schichten aus einem Kunststoff, insbesondere einem Hartkunststoff zur Ausbildung zweier Trägerplatten 14, 14'a aufgebracht sind, die mit oder ohne einer Zwischenplatte 114 fest miteinander verbunden sind.

## Patentansprüche

1. Bremsbelag mit mindestens einer Trägerplatte (14) und mindestens einem an dieser befestigten Reibmaterialblock (22) für schienen-und schienenungebundene Fahrzeuge, wobei zum Herstellen eines Verbundes zwischen der Trägerplatte (14) und dem Reibmaterialblock (22) auf der den Reibmaterialblock tragenden Seite der. Trägerplatte mindestens ein Halterungsbett (16) für den Reibmaterialblock vorgesehen ist,
**dadurch gekennzeichnet,**
**dass** der Bremsbelag (100) aus zwei übereinander liegend angeordneten Reibmaterialblöcken (22, 22') besteht, deren einander zugekehrten Oberflächen je ein Halterungsbett (16; 16') aus auf die Reibmaterialblöcke aufgesinterten, separaten voneinander beabstandeten Materialerhöhungen (20) aus einem Metallpulver aufweisen, wobei zwischen den Reibmaterialblöcken (22, 22') mindestens eine Trägerplatte (14) angeordnet ist, und wobei das Metallpulver unter lokal auf das Metallpulver oder lokal auf Abschnitte der Reibmaterialblöcke aufgebrachte Energiezuführung aufgebracht wird.

2. Bremsbelag nach Anspruch 1,
**dadurch gekennzeichnet,**
**dass** jeder Reibmaterialblock (22; 22') aus metallischem Material oder Keramik besteht, wobei auf den Halterungsbetten (16, 16') durch Aufspritzen oder Anspritzen je einer Schicht aus einem Kunststoff, insbesondere Hartkunststoff, zur Ausbildung zweier Trägerplatten (14, 14'a) aufgebracht sind, die mit oder ohne einer Zwischenplatte (114) fest miteinander verbunden sind.

3. Bremsbelag nach Anspruch 1,
**dadurch gekennzeichnet,**
**dass** die beiden Reibmaterialblöcke (22, 22') mit ihren Halterungsbetten (16, 16') 'über eine zwischen den beiden Reibmaterialblöcken angeordnete Trägerplatte (14) aus Metall, einem Hartkunststoff, einer Metallfolie, einer Kunststofffolie, Metalllegierungen, Glas oder Keramik verbunden sind.

4. Bremsbelag nach einem der Ansprüche 1 bis 3,
**dadurch gekennzeichnet,**
**dass** das Material der Materialerhöhungen (20) aus Stahl, Metall, das Karbide und/oder Nitride enthält, Keramik, Glas oder Hartkunststoffen besteht.

5. Bremsbelag nach einem der Ansprüche 1 bis 4,
**dadurch gekennzeichnet,**
**dass** der Reibmaterialblock (22, 22') des Bremsbelages in die Oberflächenstruktur des Halterungsbettes (16) eingepresst ist.

6. Bremsbelag nach einem der Ansprüche 1 bis 5,
**dadurch gekennzeichnet,**
**dass** die Materialerhöhungen (20) rasterartig auf dem Reibmaterialblock (22, 22') angeordnet sind.

## Claims

1. Brake pad with at least one carrier plate (14) and at least one friction material block (22) fixed thereon for rail vehicles and vehicles which are not mounted on rails, whereby at least one fixing bed (16) for the friction material block is provided on the side of the carrier plate which carries the friction material block for producing a compound between the carrier plate (14) and the friction material block (22),
**characterized in**
**that** the brake pad (100) is made of two friction material blocks (22, 22') placed superimposed, the surfaces thereof which are turned to each other have respectively one fixing bed (16 ; 16') made of separate material prominences (20) made of a metal powder which are spaced from each other, sintered on the friction material blocks, whereby at least one carrier plate (14) is placed between the friction material blocks (22, 22') and whereby the metal powder is applied by feeding energy applied locally onto the metal powder or locally onto sections of the friction material blocks.

2. Brake pad according to claim 1,
**characterized in**
**that** each friction material block (22 ; 22') is made of a metallic material or of ceramics, whereby respectively one layer of plastics, in particular of hard plastics, is applied on the fixing beds (16, 16') by spraying on or by spraying for constituting two carrier plates (14, 14a) which are firmly connected with each other with or without an intermediate plate (114).

3. Brake pad according to claim 1,
**characterized in**
**that** the two friction material blocks (22, 22') are connected with their fixing beds (16, 16') by a carrier plate (14) made of metal, of hard plastics, of a metal foil, a plastics foil, metal alloys, glass or ceramics which is placed between the two friction material blocks.

4. Brake pad according to any of the claims 1 to 3,
**characterized in**
**that** the material of the material prominences (20) is made of steel, metal which contains carbides and/or nitrides, ceramics, glass or hard plastics.

5. Brake pad according to any of the claims 1 to 4,
**characterized in**
**that** the friction material block (22, 22') of the brake pad is pressed into the surface structure of the fixing bed (16).

6. Brake pad according to any of the claims 1 to 5,
**characterized in**
**that** the material prominences (20) are placed in the art of a grid on the friction material block (22, 22').

## Revendications

1. Garniture de frein avec au moins une plaque de support (14) et au moins un bloc de matériau de friction (22) fixé à celle-ci pour des véhicules sur rails et des véhicules non montés sur rails, au moins un lit de fixation (16) pour le bloc de matériau de friction étant prévu sur le côté de la plaque de support qui porte le bloc de matériau de friction pour produire un assemblage entre la plaque de support (14) et le bloc de matériau de friction (22),
**caractérisée en ce**
**que** la garniture de friction (100) est constituée par deux blocs de matériau de friction (22, 22') placés superposés dont les surfaces tournées l'une vers l'autre présentent chacune un lit de fixation (16 ; 16') constitué par des bosses de matériau (20) en une poudre métallique séparées, espacées, frittées sur les blocs de matériau de friction, cependant qu'au moins une plaque de support (14) est placée entre les blocs de matériau de friction (22, 22') et cependant que la poudre métallique est appliquée par apport d'énergie appliqué localement sur la poudre métallique ou localement sur des sections des blocs de matériau de friction.

2. Garniture de frein selon la revendication 1,
**caractérisée en ce**
chaque bloc de matériau de friction (22 ; 22') est en matériau métallique ou en céramique, une couche de plastique, en particulier de plastique dur, étant appliquée sur les lits de fixation (16, 16') par pulvérisation sur ou par pulvérisation pour constituer deux plaques de support (14, 14'a) qui sont reliées fermement l'une à l'autre avec ou sans plaque intermédiaire (114).

3. Garniture de frein selon la revendication 1,
**caractérisée en ce**
**que** les deux blocs de matériau de friction (22, 22') sont reliés avec leurs lits de fixation (16, 16') par une plaque de support (14) en métal, plastique dur, feuille de métal, feuille de plastique, alliages de métal, verre ou céramique qui est placée entre les blocs de matériau de friction.

4. Garniture de frein selon l'une des revendications 1 à 3,
**caractérisée en ce**
**que** le matériau des bosses de matériau (20) est en acier, métal qui contient des carbures et/ou nitrures, en céramique, en verre ou en plastiques durs.

5. Garniture de frein selon l'une des revendications 1 à 4,
**caractérisée en ce**
**que** le bloc de matériau de friction (22, 22') de la garniture de frein est pressé dans la structure de surface du lit de fixation (16).

6. Garniture de frein selon l'une des revendications 1 à 5,
**caractérisée en ce**
**que** les bosses de matériau (20) sont placées à la manière d'une grille sur la plaque de support (14).
